# FASCICULE DE BREVET EUROPEEN

(11) **EP 0 647 566 B1**
(45) Date de publication et mention de la délivrance du brevet: **02.01.1997**
(21) Numéro de dépôt: 94420268.8
(22) Date de dépôt: 06.10.1994
(51) Int. Cl.: B65D 6/16, B65D 19/18

(54) **Recipient polyvalent en matiere plastique, repliable, réutilisable et gerbable**
Faltbarer, wiederverwendbarer und stapelbarer Mehrzweckbehälter aus Kunststoff
Foldable, reuseable and stackable plastic multi-purpose container

(30) Priorité: 07.10.1993 FR 9312152
(43) Date de publication de la demande: 12.04.1995
(73) Titulaire: CARTONNAGES DES MONTS DU LYONNAIS CML, F-01120 Montluel (FR); Pascal, Jacky, F-69290 Grezieu la Varenne (FR)
(72) Inventeur: Pascal, Jacky, F-69290 Grezieu La Varenne (FR); Pascal, Philippe, F-01120 Montluel (FR)
(74) Mandataire: Laurent, Michel

(56) Documents cités:
- EP-A- 0 277 919
- US-A- 2 989 226
- US-A- 4 461 137

## Description

L'invention concerne un récipient réalisé en matière plastique, ou en un complexe plastique-bois, susceptible de recevoir tout type de produits, pré-emballés, pulvérulents, voire même liquides.

Ce récipient est susceptible d'être repliable sur lui-même afin d'en diminuer son encombrement et d'assurer un gain de rangement voisin de six fois son volume lors de son transport à vide. Il est donc susceptible également d'être réutilisable et en outre gerbable, compte-tenu des impératifs liés au transport de denrées, lorsque ledit emballage est monté.

On connaît à ce jour de nombreux types d'emballage susceptibles d'être repliés, d'être gerbés et d'être réutilisés. De manière traditionnelle, ces emballages sont réalisés en carton, et leur montage ou au contraire leur repliage s'effectue de manière très aisée, au niveau des zones de pliure définissant les arêtes dudit emballage.

Cependant, d'une part, ce type d'emballage en carton n'est pas à l'épreuve des ruissellements, notamment des liquides, et d'autre part et surtout, il ne confère pas aux ensembles gerbés de cartons les uns sur les autres, une stabilité suffisante aujourd'hui de plus en plus recherchée.

On a alors proposé des emballages réalisés en matière plastique qui sont eux éventuellement étanches, gerbables de manière beaucoup plus aisée que le carton, puisqu'il est possible de réaliser par moulage ou thermoformage des orifices destinés à recevoir des pieds rapportés ou issus de moulage. En revanche, ils ne sont pas repliables et partant l'encombrement qu'ils génèrent lorsque l'on doit rapatrier les emballages vides au lieu de chargements augmente de manière significative les coûts de rapatriement.

Afin de pallier cet inconvénient, on a proposé par exemple dans le document US-A-4 673 087, un emballage en matière plastique dont les différentes parois sont réalisées notamment par extrusion, lesdites parois étant jointes entre elles au moyen de cornières métalliques.

Les parois latérales définissant cet emballage sont reçues d'une part, dans une base également réalisée en matière plastique, le couvercle venant s'emmancher sur les parois latérales, couvercle également en matière plastique. Par ailleurs, le couvercle est muni d'orifices de réception, destinés à recevoir les pieds dont est munie la base, et ce, afin de permettre un gerbage stable de ces emballages les uns sur les autres.

Cependant, ce type de récipient est d'un poids relativement important, inhérent notamment à l'utilisation des cornières métalliques, et en outre son montage bien que ne nécessitant pas de compétences particulières, génère une perte de temps non négligeable.

L'invention vise à proposer un emballage polyvalent palliant ces différents inconvénients, et dont le montage et le repliage soient simples à réaliser, sans engendrer une perte de temps trop importante.

Ce récipient polyvalent réalisé en matière plastique, repliable, réutilisable et gerbable de forme parallélipipédique, comporte un fond ou base, ainsi que quatre faces latérales, et un couvercle amovible; deux des faces latérales opposées et le fond ou base, sont issus de la même feuille de matière plastique et constituent un sous-ensemble continu, les deux autres faces latérales opposées sont rapportées réversiblement sur le sous-ensemble ainsi constitué, notamment par emboitement. Ces caractéristiques sont connues du document EP-A-0 277 919. Le récipient de la présente invention se caractérise en ce que ledit sous-ensemble présente deux pliures supplémentaires, ménagées sensiblement en zone inférieure desdites faces latérales opposées, et en ce que le récipient est maintenu déplié et monté par coopération du couvercle emboîtable sur le tout ainsi réalisé.

En d'autres termes, l'invention consiste à réaliser un récipient en matière plastique repliable, sans faire appel à des éléments extérieurs à l'emballage du récipient proprement dit.

Selon une caractéristique avantageuse de l'invention, le fond ou base du récipient comporte des lattes de bois ou en un matériau résistant, entourées par la feuille de matière plastique constitutif du sous-ensemble continu, collée ou fixée sur celles-ci. De la sorte, on confère au fond une certaine rigidité, tout en disposant d'un emballage de faible masse.

Selon une caractéristique importante de l'invention, les deux faces latérales opposées, autres que celles constitutives du sous-ensemble dit "de fond", présentent un repliage sur chacun des bords de la feuille de matière plastique qui les compose, de telle sorte à constituer des renforts verticaux susceptibles d'éviter le flambage dudit récipient, notamment lors du gerbage.

On peut avantageusement munir les arêtes latérales de ces deux faces de cornières, également réalisées en matière plastique, préalablement au collage après repliage des extrémités latérales de la feuille en matière plastique qui les constituent. On augmente de la sorte la résistance au flambage de l'emballage.

Selon une autre caractéristique de l'invention, la fixation réversible desdites deux faces latérales opposées sur le sous-ensemble "de fond" constitué par les deux faces latérales principales opposées et le fond, est en outre optimisée par mise en place de vis ou de fermoirs pivotants en matière plastique solidarisés au niveau d'orifices adéquats préalablement réalisés au sein des faces considérées, et assurant une pression suffisante pour conférer à l'emballage une bonne étanchéité au ruissellement.

Selon une autre caractéristique de l'invention, le couvercle reçoit notamment par collage des éléments réalisés en matière plastique, notamment par thermoformage, définissant des cuvettes décalées, régulièrement réparties, destinées à coopérer avec des pieds répartis de la même manière, solidarisés notamment par collage sur le face externe du fond de l'emballage supérieure, de manière correspondante, et ce afin de permettre un gerbage stable de ces emballages les uns sur les autres.

Selon une autre caractéristique de l'invention, on adjoint par collage sur la face interne du fond, des faces latérales et du couvercle, une feuille de polystyrène expansé ou d'un complexe polystyrène expansé - film de matière plastique diélectrique, de telle sorte à conférer à l'emballage ainsi réalisé des propriétés isothermiques.

La manière dont l'invention peut être réalisée et les avantages qui en découlent ressortiront mieux de l'exemple de réalisation qui suit donné à titre indicatif et non limitatif à l'appui de figures annexées.
La figure 1 est une représentation schématique en perspective de l'emballage monté conformément à l'invention.
La figure 2 est une vue éclatée de l'emballage en cours de montage conformément à l'invention.
La figure 3 est une représentation schématique en perspective de l'emballage replié selon l'invention.
La figure 4 est une représentation schématique d'une forme de réalisation du dispositif rapporté sur le couvercle permettant le gerbage de l'emballage.
La figure 5 est une représentation schématique vue de dessus d'un organe de fermeture ou fermoir selon l'invention, dont la figure 6 est une vue en section longitudinale.
La figure 7 est une représentation schématique de l'assemblage réversible de deux des faces de l'emballage de l'invention.

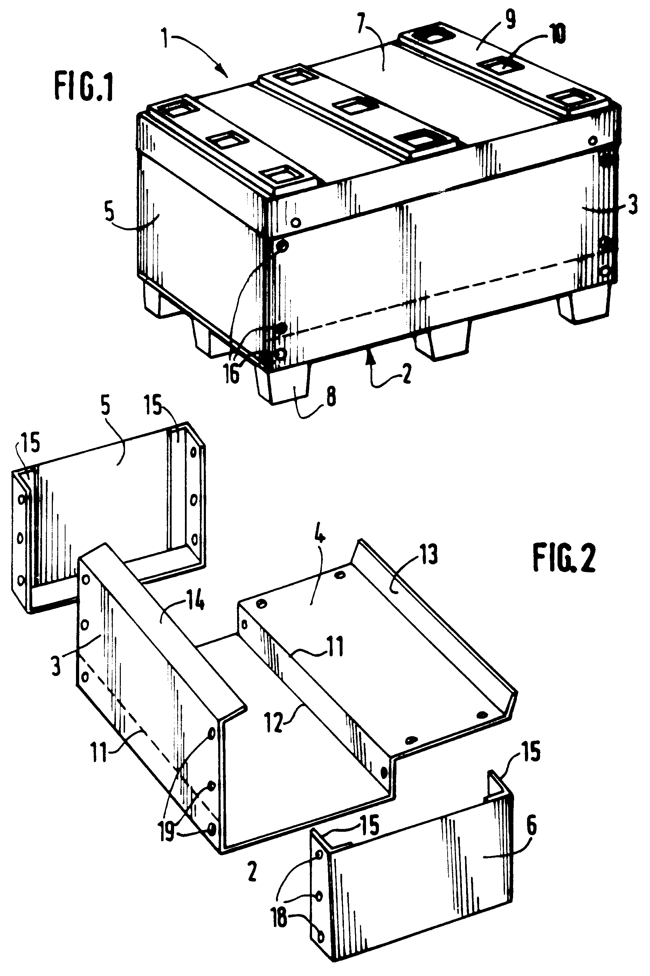

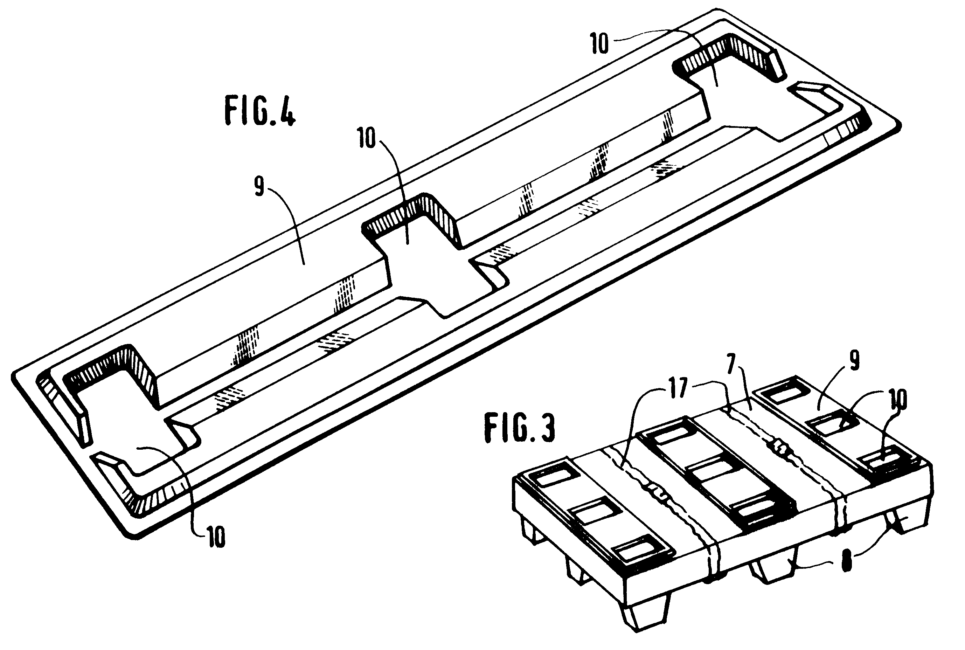

Comme on peut l'observer sur la figure 1, le récipient (1) est de forme parallélipipédique et comporte fondamentalement deux faces latérales principales (3) et (4), deux faces latérales secondaires (5) et (6), un fond (2) et un couvercle (7).

La totalité de ces éléments constitutifs de l'emballage ou du récipient est réalisé en matière plastique et plus particulièrement en polypropylène.

Selon une caractéristique fondamentale de l'invention, le sous-ensemble, constitué par les deux faces latérales principales (3) et (4) et le fond (2), forme un tout, sans discontinuité, réalisé à partir de la même feuille de polypropylène, et dénommé ci-après sous-ensemble de fond.

De fait, ce sous-ensemble présente deux pliures de base (12) définissant le fond (2) par rapport auxdites faces latérales principales (3, 4), mais également deux pliures supplémentaires (11), situées en zone inférieure des faces latérales principales (3) et (4), de telle sorte, ainsi qu'il sera montré ultérieurement, à permettre le pliage desdites faces latérales contre le fond (2) pour aboutir au repliage total de l'emballage.

Avantageusement, le fond (2) est rigidifié par la mise en place de lattes en bois, collées sur la partie de la feuille de polypropylène correspondant au fond, et recouverte par des rabats (non représentés), également issus de ladite feuille de polypropylène, rabats collés sur lesdites lattes.

De plus, ainsi qu'on peut l'observer sur la figure 1, le fond (2) reçoit des pieds (8), avantageusement thermoformés et collés sur la face externe dudit fond. Ces pieds (8) sont de forme identique, régulièrement répartis et dans le cadre décrit, au nombre de neuf, selon trois rangées de trois.

Selon une autre caractéristique de l'invention, les faces latérales secondaires (5) et (6), sont chacune issues d'une feuille de polypropylène, et sont destinées à venir s'emboîter intérieurement, ou s'emmancher au niveau du sous-ensemble constitué par les deux faces latérales principales et le fond (2).

Parallèlement, chacun des bords latéraux desdites faces (5) et (6) est renforcé (15) par repliage sur elle-même de la feuille de polypropylène constitutive desdites faces. Ce repliage des bords est suivi d'une étape de collage de ceux-ci contre la face considérée, confèrant ainsi à chacun des montants latéraux desdites faces (5) et (6) une résistance au fléchissement ou au flambage, inhérent à l'effet poutre ainsi généré, et permettant à l'emballage monté de développer une capacité de gerbage sans risque de voir s'affaisser lesdits emballages.

Lorsque l'on désire augmenter cette capacité de résistance au flambage, on adjoint au niveau des zones de repliage (15) des cornières, également réalisées en matière plastique, accroissant la rigidification des arêtes latérales desdites faces. Les bords de la feuille de polypropylène constitutive des faces (5,6) sont alors rabattus puis collés sur les cornières.

La mise en place de ces faces latérales secondaires (5) et (6) sur le sous-ensemble constitué par les faces latérales principales (3) et (4) et le fond (2) s'effectue comme déjà dit par emboîtement ou emmanchement, puis fixation réversible au moyen de vis ou fermoirs réalisés en matière plastique injectée (16), décrits plus en détail ultérieurement, venant coopérer avec des orifices (18) et (19), ménagés d'une part, sur les montants latéraux desdites faces latérales secondaires (5) et (6) et d'autre part, sur les extrémités latérales desdites faces latérales principales (3) et (4).

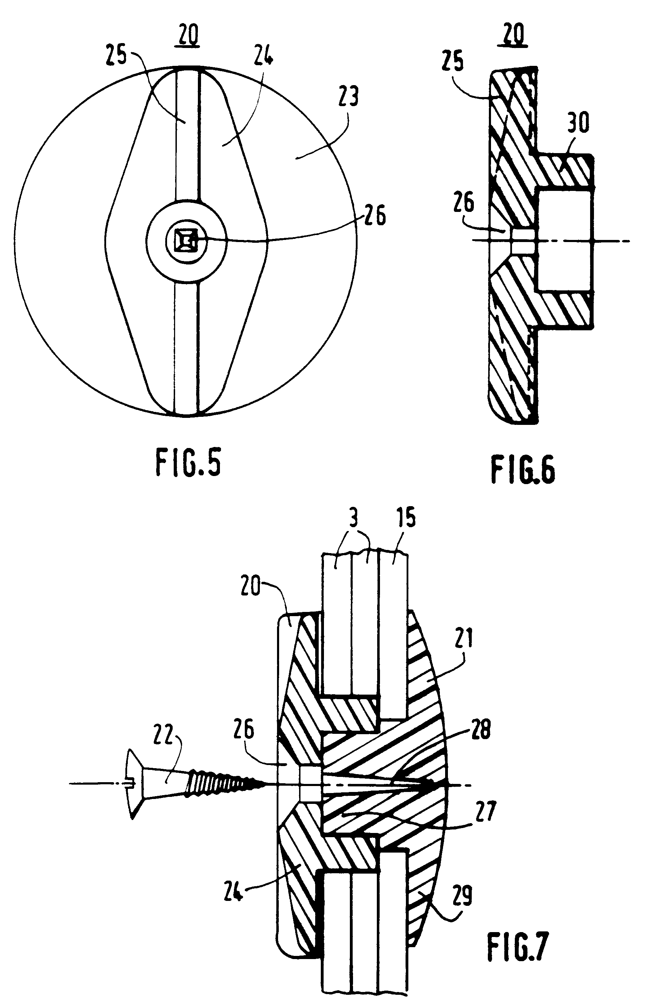

Les fermoirs (16), décrits en liaison avec les figures 5 à 7, sont chacun constitués de deux pièces (20, 21), réalisées en matière plastique injectée, situées de part et d'autre des faces à solidariser réversiblement, et réunies entre elles au moyen d'une vis (22), elle-même solidarisée lors du montage à la pièce femelle (20). Lesdites pièces (20, 21) traversent les perforations (18,19) réalisées au sein des faces à assembler.

La pièce femelle (20), décrite plus en détail en liaison avec les figures 5 et 6, est monobloc, et comporte une rondelle circulaire (23), destinée à venir s'appuyer sur l'extérieur de l'une des faces (3) à assembler, surmontée d'une partie en relief de forme sensiblement en losange (24), coaxiale avec le centre de la rondelle (23), et comprenant elle-même une saillie linéaire (25), s'étendant selon le grand axe de la forme en losange (24). Cette saillie linéaire (25) est destinée à favoriser le pivotement de l'ensemble de la pièce femelle (20), lors de l'étape de solidarisation ou de désolidarisation des faces concernées de l'emballage de l'invention. En outre, cette saillie linéaire (25) est interrompue en son milieu, correspondant de fait au centre de la rondelle (23), par un orifice (26), destiné à recevoir la vis (22) lors de la réalisation de ladite pièce femelle. Enfin, la rondelle (23) se prolonge au niveau de son autre face par un puits cylindrique (30), coaxial avec le centre de la rondelle (23), et destiné à s'insérer dans l'orifice (19) des faces à assembler.

La pièce mâle (21), que l'on peut visualiser sur la figure 7, comporte également une rondelle circulaire (29), destinée à prendre appui sur l'intérieur de l'autre face (15) à assembler. Cette rondelle (29) se prolonge par une portion sensiblement cylindrique (27), coaxiale avec le centre de la rondelle (29), et destinée à d'une part, venir s'insérer dans l'orifice (18, 19) des faces à assembler, et d'autre part à venir s'emboîter dans le puits (30) de la partie femelle (20). Cette portion est en outre percée d'une lumière taraudée (28), coaxiale avec la portion (27), afin de coopérer avec la vis (22) solidarisée à ladite partie femelle. Ainsi, un simple quart de tour de la partie femelle (20) engendre la solidarisation des dites parties mâles et femelles entre elles, et partant, des faces de l'emballage qu'elles emprisonnent entre leur rondelle respective.

Ces fermoirs (16) constituent de fait un système pivotant permettant d'aboutir à un effet de verrouillage en pression des faces latérales (3,4) avec les faces latérales (5,6). Le nombre de fermoirs est de huit pour l'ensemble de l'emballage, ce nombre pouvant bien entendu être modulé en fonction du degré d'étanchéité au ruissellement recherché.

Selon une autre caractéristique de l'invention, le couvercle (7) vient s'emboîter sous l'ensemble constitué par le sous-ensemble (3, 4, 2) et l'emboîtement des faces latérales secondaires (5) et (6). En d'autres termes, le couvercle (7) vient conférer la stabilité à l'emballage ainsi monté.

Selon une caractéristique de l'invention, le couvercle (7) reçoit des éléments (9), recevant chacun deux ou trois cuvettes (10), réalisés notamment en polypropylène par thermoformage. Ces éléments (9) sont rapportés notamment par collage sur la face supérieure du couvercle (7) et sont régulièrement répartis de telle sorte à coopérer avec les pieds (8) d'un emballage venant se gerber par dessus.

Le repliage de l'emballage ainsi réalisé s'effectue de manière très simple. On procède tout d'abord à l'escamotage du couvercle (7) puis l'enlèvement des deux faces latérales secondaires (5) et (6) après pivotement des fermoirs (16), faces latérales (5,6) que l'on positionne alors à plat au niveau du fond (2), puis on rabat sur ceux-ci les faces latérales (3) et (4), rabat rendu possible par les zones de pliure (11).

Enfin, on vient positionner le couvercle sur l'ensemble ainsi obtenu que l'on solidarise avantageusement au moyen de courroies ou système équivalent (17), tel qu'on l'a représenté sur la figure 3.

Selon une forme évoluée de l'emballage de l'invention, on colle sur la face interne des faces latérales (3, 4, 5, 6), du fond (2) et du couvercle (7), une feuille d'environ 2 centimètres d'épaisseur de polystyrène expansé, ou un complexe polystyrène expansé - Mylar (marque déposé), afin de conférer à l'emballage des propriétés isothermes.

On conçoit de fait tout l'intérêt d'un tel récipient compte-tenu de son caractère réutilisable, gerbable et repliable, réalisé en matière plastique, et notamment en polypropylène, dont la non-nocivité présente des avantages importants du point de vue environnement, dès lors que l'on souhaite éliminer ledit récipient. On conçoit également la grande simplicité de mise en oeuvre, notamment de montage ou de démontage de cet emballage, le rendant particulièrement adapté au transport de toute marchandise à des coûts réduits.

## Revendications

1. Récipient polyvalent réalisé en matière plastique, repliable, reutilisable et gerbable de forme parallélipipédique, comportant un fond ou base (2), ainsi que quatre faces latérales (3 - 6), et un couvercle escamotable (7), deux (3, 4) des faces latérales opposées et le fond ou base (2) constituant un sous-ensemble continu, dit "de fond", réalisé à partir d'une même feuille de matière plastique par pliage, les deux autres faces latérales opposées (5, 6) étant rapportées réversiblement sur le sous-ensemble (2, 3, 4) ainsi constitué, notamment par emboitement ou emmanchement, ***caractérisé*** en ce que ledit ensemble présente deux pliures supplémentaires (11), ménagées sensiblement en zone inférieure desdites faces latérales opposées (3, 4) du sous-ensemble "de fond", et en ce que le récipient est maintenu déplié et monté par coopération du couvercle emboîtable (7) sur le tout (2 - 6) ainsi réalisé.

2. Récipient selon la revendication 1, ***caractérisé*** en ce que le fond ou base (2) comporte des lattes de bois ou en un matériau résistant, entourées par la feuille de matière plastique constitutif du sous-ensemble continu (2, 3, 4), collée ou fixée sur lesdites lattes.

3. Récipient selon l'une des revendications 1 et 2, ***caractérisé*** en ce que les deux faces latérales opposées (5, 6), autres que celles (3, 4) constitutives du sous-ensemble dit "de fond" (2, 3, 4), présentent un repliage (15) sur chacun des bords de la feuille de matière plastique qui les compose, de telle sorte à constituer des renforts verticaux susceptibles d'éviter le flambage dudit récipient, notamment lors du gerbage.

4. Récipient selon la revendication 3, ***caractérisé*** en ce que les arêtes latérales des deux faces latérales (5, 6) sont munies de cornières, également réalisées en matière plastique, mises en place préalablement au collage après repliage des bords de la feuille en matière plastique qui les constituent.

5. Récipient selon l'une des revendications 1 à 4, ***caractérisé*** en ce que la fixation réversible desdites deux faces latérales opposées (5, 6) sur le sous-ensemble "de fond" (2, 3, 4) constitué par les deux faces latérales (3, 4) opposées et le fond (2), est assurée par mise en place de vis ou fermoirs pivotants (16) en matière plastique au niveau d'orifices (18, 19) préalablement réalisés au sein des faces considérées.

6. Récipient selon la revendication 5, ***caractérisé*** en ce que les fermoirs (16) sont chacun constitués de deux pièces, respectivement mâle (21) et femelle (20), destinées à s'emboîter l'une dans l'autre et à se solidariser ainsi l'une à l'autre par simple pivotement de la pièce femelle (20) par rapport à la pièce mâle (21).

7. Récipient selon la revendication 6, ***caractérisé*** en ce que :
- la pièce femelle (20) comporte :
. une rondelle circulaire (23), destinée à venir s'appuyer sur l'extérieur de l'une des faces (3) à assembler,
. une forme en relief sensiblement en losange (24), surmontant la rondelle (23), et coaxiale avec celle-ci, et comprenant elle-même une saillie linéaire (25), s'étendant selon le grand axe de la forme en losange (24), ladite saillie (25) étant destinée à favoriser le pivotement de l'ensemble de la pièce femelle (20), lors de la solidarisation ou de la désolidarisation des faces concernées de l'emballage, ladite saillie (25) étant en outre interrompue en son milieu, correspondant de fait au centre de la rondelle (23), par un orifice (26), destiné à recevoir une vis (22) de solidarisation lors de la réalisation de ladite pièce femelle,
. un puits cylindrique (30), prolongeant la rondelle (23) au niveau de son autre face, et coaxial avec le centre de celle-ci, le dit puits étant destiné à s'insérer dans l'orifice (18, 19) des faces à assembler ;
- la pièce mâle (21) comporte :
. une rondelle circulaire (29), destinée à prendre appui sur l'intérieur de l'autre face (15) à assembler,
. une portion sensiblement cylindrique (27), prologeant la rondelle (29), et coaxiale avec le centre de celle-ci, ladite portion (27) étant destinée à d'une part, venir s'insérer dans l'orifice (18, 19) des faces à assembler, et d'autre part à venir s'emboîter dans le puits (30) de la partie femelle (20), ladite portion (27) étant en outre percée d'une lumière taraudée (28), coaxiale avec la portion (27), afin de coopérer avec la vis (22) solidarisée à ladite partie femelle (20).

8. Récipient selon l'une des revendications 1 à 7, ***caractérisé*** en ce que le couvercle (7) reçoit notamment par collage des éléments (9) réalisés en matière plastique, notamment par thermoformage, définissant des cuvettes décalées (10), destinées à coopérer avec des pieds (8) répartis de la même manière, solidarisés notamment par collage sur le face externe du fond (2) de l'emballage supérieure, de manière correspondante, et ce afin de permettre un gerbage stable de ces emballages les uns sur les autres.

9. Récipient selon l'une des revendications 1 à 8, ***caractérisé*** en ce que l'on adjoint par collage sur la face interne du fond (2), des faces latérales (3, 4, 5, 6) et du couvercle (7), une feuille de polystyrène expansé ou en un complexe polystyrène expansé - film de matière plastique diélectrique, de telle sorte à conférer à l'emballage ainsi réalisé des propriétés isothermiques.

## Claims

1. A multipurpose container, produced from plastic, which can be folded up,re-usable and stackable, of parallelepipedal shape, including a bottom or base (2), as well as four side faces (3-6) and a retractable lid (7), two (3, 4) of the opposite side faces, and the bottom or base (2) stemming from the same sheet of plastic and forming a continuous sub-assembly, the two other opposite side faces (5, 6) being reversibly attached to the subassembly (2, 3, 4) thus formed, especially by interlocking, ***characterized*** in that said subassembly has two supplementary foldings, made substantially in the lower region of said opposite side faces, and wherein the container is thus kept opened out and assembled by the interaction of the interlockable lid (7) on the entire unit (2-6) thus produced.

2. The container as claimed in claim 1, ***wherein*** the bottom or base (2) includes laths of wood or of a strong material, these laths being surrounded by the sheet of plastic forming the continuous subassembly (2, 3, 4) and glued or fixed to said laths.

3. The container as claimed in one of claims 1 and 2, ***wherein*** the two opposite side faces (5, 6), other than those (3, 4) forming the subassembly called "bottom" subassembly (2, 3, 4), have a folded-back part (15) on each of the edges of the plastic sheet of which they are composed, in such a way as to form vertical reinforcements capable of preventing said container from buckling, especially during stacking.

4. The container as claimed in claim 3, ***wherein*** the side edges of the two side faces (5, 6) are equipped with corner pieces, also produced from plastic, which are installed prior to the gluing, after folding back the edges of the plastic sheet from which they are formed.

5. The container as claimed in one of claims 1 to 4, ***wherein*** the reversible fixing of said two opposite side faces (5, 6) to the "bottom" subassembly (2, 3, 4), formed by the two opposite side faces (3, 4) and the bottom (2), is provided by installing screws or pivoting fasteners (16) made of plastic, at orifices (18, 19) produced beforehand in the faces in question.

6. The container as claimed in claim 5, ***wherein*** the fasteners (16) each consist of two pieces, respectively a male piece (21) and a female piece (20), intended to interlock, one in the other, and thus to be secured to each other simply by pivoting the female piece (20) with respect to the male piece (21).

7. The container as claimed in claim 6, ***wherein***:
- the female piece (20) includes:
• a circular washer (23) intended to bear on the outside of one of the faces (3) to be assembled,
• a substantially lozenge-shaped relief part (24), surmounting the washer (23) and coaxial with the latter, and itself comprising a linear projection (25) extending along the major axis of the lozenge-shaped part (24), said projection (25) being intended to promote pivoting of the entire female piece (20), when securing or unsecuring the faces in question of the package, said projection (25) being furthermore interrupted in the middle of it, corresponding in fact to the center of the washer (23), by an orifice (26) intended to receive a securing screw (22) during the production of said female piece,
• a cylindrical shaft (30) extending the washer (23) at its other face and being coaxial with the center of the latter, said shaft being intended to be inserted into the orifice (18, 19) of the faces to be assembled;
- the male piece (21) includes:
• a circular washer (29) intended to bear on the inside of the other face (15) to be assembled,
• a substantially cylindrical portion (27) extending the washer (29) and being coaxial with the center of it, said portion (27) being intended, on the one hand, to be inserted into the orifice (18, 19) of the faces to be assembled and, on the other hand, to be interlocked in the shaft (30) of the female part (20), said portion (27) being furthermore pierced by a tapped hole (28), coaxial with the portion (27), so as to interact with the screw (22) secured to said female part (20).

8. The container as claimed in one of claims 1 to 7, ***wherein*** the lid (7) receives, especially by gluing, elements (9) produced from plastic, especially by thermo-forming, defining offset cups (10) intended to interact with feet (8) which are likewise distributed and secured, especially by gluing, to the outer face of the bottom (2) of the upper package, in a corresponding manner, and this is so as to enable these packages to be stably stacked on top of each other.

9. The container as claimed in one of claims 1 to 8, ***wherein*** a sheet of expanded polystyrene, or of a complex comprising expanded polystyrene and a film of dielectric plastic, is adjoined to the inner face of the bottom (2), of the side faces (3,4,5,6) and of the lid (7) by gluing, in such a way as to confer isothermal properties on the package thus produced.

## Patentansprüche

1. Aus Kunststoff hergestellter, zusammenklappbarer, wiederverwendbarer, stapelbarer und quaderförmiger Mehrzweckbehälter, der einen Boden bzw. eine Grundfläche (2) sowie vier Seitenflächen (3-6) und einen abnehmbaren Deckel (7) aufweist, wobei zwei einander gegenüberliegende Seitenflächen (3,4) und der Boden bzw. die Grundfläche (2) eine durchgehende, als "Grundanordnung" bezeichnete Teilanordnung bilden, die aus demselben Kunststoffbogen durch Knicken hergestellt wird, und die zwei anderen einander gegenüberliegenden Seitenflächen (5,6) abnehmbar an der so gebildeten Teilanordnung (2,3,4) angebracht sind, insbesondere durch Einschachteln oder Aufstecken, **dadurch gekennzeichnet,** daß die genannte Anordnung zwei zusätzliche Falze (11) aufweist, welche im wesentlichen im unteren Bereich der genannten gegenüberliegenden Seitenflächen (3,4) der "Grundanordnung" genannten Teilanordnung angebracht sind, und daß der Behälter mit Hilfe des auf die so erhaltene Gesamtanordnung (2-6) aufstülpbaren Deckels (7) aufgeklappt und zusammengesetzt gehalten wird.

2. Behälter nach Anspruch 1, **dadurch gekennzeichnet,** daß der Boden bzw. die Grundfläche (2) Latten aus Holz oder aus einem widerstandsfähigen Material aufweist, welche von dem die durchgehende Teilanordnung (2,3,4) bildenden Bogen aus Kunststoff umgeben werden, der auf die genannten Latten geklebt oder auf ihnen befestigt ist.

3. Behälter nach einem der Ansprüche 1 und 2, **dadurch gekennzeichnet,** daß die zwei gegenüberliegenden Seitenflächen (5,6), die nicht mit denen (3,4) übereinstimmen, welche Bestandteil der als "Grundanordnung" bezeichneten Teilanordnung (2,3,4) sind, an jedem der Ränder des Bogens aus Kunststoff, aus dem sie bestehen, eine Umfaltung (15) aufweisen, so daß diese Bereiche vertikale Verstärkungen darstellen, die ein Ausknicken des genannten Behälters, insbesondere beim Stapeln, verhindern.

4. Behälter nach Anspruch 3, **dadurch gekennzeichnet,** daß die Seitenkanten der zwei Seitenflächen (5,6) mit ebenfalls aus Kunststoff gefertigten Winkelprofilen versehen sind, welche vor dem Kleben nach Umfalten der diese Seitenkanten bildenden Ränder des Kunststoffbogens angebracht werden.

5. Behälter nach einem der Ansprüche 1 bis 4, **dadurch gekennzeichnet,** daß die lösbare Befestigung der zwei gegenüberliegenden Seitenflächen (5,6) an der "Grundanordnung" (2,3,4) bestehend aus den zwei gegenüberliegenden Seitenflächen (3,4) und dem Boden (2) durch Anbringen von Schrauben oder drehbaren Verschlüssen (16) aus Kunststoff in zuvor in den betreffenden Flächen angebrachten Öffnungen (18,19) gewährleistet wird.

6. Behälter nach Anspruch 5, **dadurch gekennzeichnet,** daß die Verschlüsse (16) jeweils aus zwei Teilen, nämlich einem Einsteckteil (21) und einem Aufnahmeteil (20), bestehen, die dazu bestimmt sind, ineinandergesteckt zu werden und sich durch einfache Drehung des Aufnahmeteils (20) bezüglich des Einsteckteils (21) miteinander zu verbinden.

7. Behälter nach Anspruch 6, **dadurch gekennzeichnet,** daß
- das Aufnahmeteil (20) folgendes aufweist:
• eine kreisförmige Scheibe (23), die dazu bestimmt ist, auf der Außenseite einer der zusammenzufügenden Flächen (3) zur Auflage zu kommen,
• einen erhabenen, im wesentlichen rautenförmigen Körper (24), der die Scheibe (23) überragt und zu dieser koaxial angeordnet ist und seinerseits einen geradlinigen Vorsprung (25) aufweist, der sich entlang der großen Achse des rautenförmigen Körpers (24) erstreckt, wobei der genannte Vorsprung (25) dazu bestimmt ist, das Verdrehen des Aufnahmeteils (20) beim Verbinden oder Trennen der betroffenen Flächen der Verpackung zu erleichtern, wobei bei der Herstellung des genannten Aufnahmeteils der genannte Vorsprung (25) in seiner Mitte, die dem Mittelpunkt der Scheibe (23) entspricht, von einer Öffnung (26) durchbrochen wird, die zur Aufnahme einer Verbindungsschraube (22) bestimmt ist,
• einen zylindrischen Kragen (30), der auf der anderen Seite der Scheibe (23) herausragt und zu deren Mittelpunkt koaxial ist, wobei der genannte Kragen zum Einsetzen in die Öffnung (18,19) der zusammenzufügenden Flächen bestimmt ist;
- und das Einsteckteil (21) folgendes aufweist:
• eine kreisförmige Scheibe (29), die dazu bestimmt ist, auf der Innenseite der anderen zusammenzufügenden Fläche (15) zur Auflage zu kommen,
• einen im wesentlichen zylindrischen Abschnitt (27), der aus der Scheibe (29) herausragt und zu deren Mittelpunkt koaxial ist, wobei der genannte Abschnitt (27) einerseits zum Einsetzen in die Öffnung (18,19) der zusammenzufügenden Flächen und andererseits zum Einfügen in den Kragen (30) des Aufnahmeteils (20) bestimmt ist, wobei in dem genannten Abschnitt (27) eine innengewindete, zu dem Abschnitt (27) koaxiale Bohrung (28) eingebracht ist, welche mit der mit dem genannten Aufnahmeteil (20) verbundenen Schraube (22) zusammenwirken kann.

8. Behälter nach einem der Ansprüche 1 bis 7, **dadurch gekennzeichnet,** daß der Deckel (7) insbesondere durch Kleben mit aus Kunststoff und insbesondere durch Warmformung gefertigten Elementen (9) versehen wird, welche zueinander versetzte Mulden (10) bilden, die zum Zusammenwirken mit auf dieselbe Art angeordneten Füßen (8) bestimmt sind, welche insbesondere durch Kleben an der Außenfläche des Bodens (2) der darüberliegenden Verpackung befestigt sind, um eine stabile Stapelung dieser Verpackungen aufeinander zu ermöglichen.

9. Behälter nach einem der Ansprüche 1 bis 8, **dadurch gekennzeichnet,** daß auf der Innenfläche des Bodens (2), der Seitenflächen (3,4,5,6) und des Deckels (7) ein Bogen aus geschäumtem Polystyrol oder aus einem Komplex aus geschäumtem Polystyrol und einem Film aus dielektrischem Kunststoff durch Kleben angebracht wird, so daß der so gefertigten Verpackung isotherme Eigenschaften verliehen werden.
